# EUROPÄISCHE PATENTANMELDUNG

(11) **EP 3 881 679 A1**
(43) Veröffentlichungstag der Anmeldung: **22.09.2021**
(21) Anmeldenummer: 20163516.6
(22) Anmeldetag: 17.03.2020
(51) Int. Cl.: A01N 59/16, A01N 25/34, A01N 25/12, A01P 1/00

(54) **VERBESSERTE WOLFRAM-HALTIGE ANTIMIKROBIELLE VERBUNDWERKSTOFFE**

(71) Anmelder: Amistec GmbH & Co. KG, 6345 Kössen (AT)
(72) Erfinder: Die Erfindernennung liegt noch nicht vor
(74) Vertreter: Weickmann & Weickmann PartmbB

(57) **Zusammenfassung**

Die Erfindung betrifft die Verwendung von Wolframblau als antimikrobieller Wirkstoff, Verbundwerkstoffe, welche Wolframblau umfassen und Verfahren zur deren Herstellung.

## Beschreibung

Die Erfindung betrifft die Verwendung von Wolframblau als antimikrobieller Wirkstoff, Verbundwerkstoffe, welche Wolframblau umfassen und Verfahren zur deren Herstellung.

Um die Anlagerung von Mikroorganismen zu verhindern werden Oberflächen von Gegenständen mit antimikrobiellen Wirkstoffen behandelt oder mit antimikrobiellen Eigenschaften ausgestattet. Zur Bekämpfung der Mikroorganismen werden unter anderem Desinfektionsmittel bzw. Biozide eingesetzt. Ein großer Nachteil der Verwendung von organischen Bioziden ist jedoch die Entwicklung von Resistenzen und Kreuzresistenzen unter den Mikroorganismen. Daher wird vermehrt nach Alternativen gesucht, um Mikroorganismen wirkungsvoll zu bekämpfen und die Besiedelung von Oberflächen mit Mikroorganismen zu verhindern. Eine Möglichkeit besteht in der Verwendung von Metallen und Metallverbindungen. Aufgrund ihrer guten antimikrobiellen Wirkung werden insbesondere Silber und Kupfer häufig eingesetzt. Dabei wird in einer ersten Variante das elementare Metall in einer Form mit möglichst großer Oberfläche bereitgestellt, um eine hohe Aktivität zu erzielen. In Frage kommen hier insbesondere Nanopartikel, geschäumtes Metall oder auf einem Träger fixierte Nanopartikel. Eine zweite Variante sieht die Bereitstellung von löslichen Metallsalzen vor, die beispielsweise in Zeolithen oder direkt in ein Verbundmaterial eingebracht sind. Nachteilig ist jedoch, dass die genannten Edelmetalle bzw. Edelmetallionen vergleichsweise teuer sind und zudem durch schwefelhaltige Verbindungen oder hohe Elektrolytkonzentrationen nahezu vollständig inaktiviert werden.

In letzter Zeit wurde auch die Verwendung von Molybdän- und Wolframhaltigen Verbindungen, insbesondere Molybdaten und Molybdänoxiden sowie Wolframaten und Wolframoxiden als antimikrobielle Wirkstoffe diskutiert. Diese Verbindungen sind vergleichsweise kostengünstig und zudem ungiftig, da sie in Wasser praktisch unlöslich sind. Wolfram(VI)-oxid (WO₃) ist ein bei Raumtemperatur intensiv gelb gefärbtes, beim Erwärmen orangefarbenes Kristallpulver. Das Kristallgitter des rhombischen WO₃ besteht aus WO₆-Oktaedern, die in den drei Raumrichtungen über gemeinsame Ecken miteinander verbunden sind. Wolframtrioxid ist in Wasser und Säuren völlig unlöslich, kann aber mit Wasser zu Wolframsäure reagieren. Auf der damit verbundenen Absenkung des pH-Wertes im umgebenden Medium beruht die biozide Wirkung von Wolframtrioxid. Häufig ist die antimikrobielle Wirksamkeit von WO₃ und anderen bisher untersuchten Molybdän-und Wolfram-Verbindungen jedoch nicht ausreichend.

Aufgabe der vorliegenden Erfindung ist es daher, einen antimikrobiellen Wirkstoff mit verbesserter Aktivität und eine kostengünstige Möglichkeit zum effektiven Schutz von Materialien und Oberflächen gegen die Ansiedelung von Mikroorganismen bereitzustellen.

Neben Wolframtrioxid sind noch weitere Oxide des Wolframs bekannt. Gelbes Wolfram(VI)oxid geht unter Einwirkung von Reduktionsmitteln schließlich in braunes Wolfram(IV)oxid über. Durch Reduktion von frisch gefälltem Wolfram(VI)oxid-Hydrat erhält man gemäß

WO₃ + xH → WO₃₋ₓ(OH)ₓ

tiefblaue Lösungen von hydratisierten Mischoxiden des sechs- bis fünfwertigen Wolframs. Diese blauen Wolfram(VI)-Wolfram(V)-Mischoxide werden zusammenfassend als "Wolframblau" bezeichnet.

In der vorliegenden Erfindung wurde überraschend gefunden, dass Wolframblau eine deutlich höhere antimikrobielle Wirksamkeit zeigt als Wolframtrioxid. Bei gleicher Korngröße ist die Wirksamkeit von Wolframblau signifikant besser als die von Wolframtrioxid.

Ein erster Aspekt der Erfindung betrifft daher die Verwendung von Wolframblau als antimikrobieller Wirkstoff.

Unter *"Wolframblau"* wird gemäß der Erfindung ein sauerstoffdefizitäres Wolframtrioxid verstanden, worin Wolfram in Oxidationsstufen zwischen VI und V vorliegt. Im Gegensatz dazu ist *"Wolframgelb"* sauerstoffgesättigtes Wolframtrioxid. Wolframblau kann insbesondere als WO₃ minus etwa 1 bis 10 Mol-% Sauerstoff beschrieben werden, bevorzugt WO₃ minus etwa 5 Mol-% Sauerstoff, am stärksten bevorzugt minus 5 Mol-% Sauerstoff. Es wurde gefunden, dass gerade Wolframblau welches 5% sauerstoffdefizitär ist eine hervorragende antimikrobielle Wirksamkeit besitzt und gegenüber unterschiedlichsten Keimen aktiv ist. In diesem Zusammenhang ist zu beachten, dass Wolframoxide, die geringe Mengen an Wolframblau enthalten bereits eine bläuliche Farbe besitzen. Mischungen von Wolframgelb mit Wolframblau erscheinen blau und werden daher (fälschlicherweise) oft insgesamt als Wolframblau bezeichnet. Im Sinne der vorliegenden Erfindung wird als Wolframblau aber tatsächlich nur sauerstoffdefizitäres WO₃, insbesondere WO₃ minus etwa 5 Mol-% Sauerstoff, verstanden. Sauerstoffgesättigtes WO₃ (Wolframgelb) ist vorzugsweise nicht vorhanden.

Wolframblau ist für Menschen und Tiere nicht toxisch und weist damit eine exzellente Biokompatibilität auf. Es kann vergleichsweise kostengünstig hergestellt werden und zeigt bereits in geringen Mengen eine starke antimikrobielle Wirkung.

Wolframblau zeigt eine hohe antimikrobielle Aktivität gegen ein breites Spektrum an Mikroorganismen, einschließlich Pilzen und Viren, sowie grampositiven und gramnegativen Mikroorganismen ungeachtet deren Antibiotikaresistenz. Beispiele für Mikroorganismen, gegen die Wolframblau gemäß der Erfindung wirksam ist sind unter anderem *Lactobacillus acidophilus,* Pseudomonas, *z.B. P. aeruginosa,* Salmonellen, z.B. *S. aureus, E. coli, Candida Spp, C. albicans, C. glabrata und C. tropicalis,* Legionellen, Listerien; Vieren wie z.B. Influenza, Ebstein Barr Viren, Rotavieren und Noroviren; sowie *Aspergillus niger, fumigatus* und *flavus.* Die antimikrobielle Wirkung ist bei gleicher Korngröße im Vergleich zu Wolfram(VI)oxid (gelb) deutlich erhöht.

Eine besonders gute antimikrobielle Wirksamkeit wurde erfindungsgemäß für Wolframblau in Form von Partikeln mit einer mittleren Korngröße zwischen 0,1 µm und 0,9 µm gefunden. Bevorzugt liegt die mittlere Korngröße von Wolframblau im Bereich von 0,2 bis 0,7 µm, weiter bevorzugt bei 0,25 bis 0,5 µm. Kleinere Partikel als 0,1 µm und insbesondere Nanopartikel sind erfindungsgemäß nicht vorgesehen. Es wurde gefunden, dass mit Wolframblau bei einer Korngröße im oben genannten Bereich eine hervorragende antimikrobielle Wirksamkeit erreicht wird, sodass die mit Nanopartikeln verbundenen Risiken vermieden werden können.

Vorteilhafterweise wird gemäß der Erfindung Wolframblau eingesetzt, welches im Wesentlichen keine Partikel mit einer kleineren Korngröße als 0,1 µm aufweist. Weiter bevorzugt sind auch im Wesentlichen keine Partikel mit einer Korngröße von mehr als 0,9 µm enthalten. Durch eine enge Korngrößenverteilung wird eine besonders hohe antimikrobielle Wirksamkeit unter gleichzeitiger Vermeidung der mit Nanopartikeln verbundenen Gefahren gewährleistet.

Wolframblau selbst ist wasserunlöslich. Bei Kontakt mit Wasser, oder Luftfeuchtigkeit bewirkt Wolframblau eine Absenkung des pH-Werts. Das Wolframblau selbst geht dabei nicht in Lösung und wird nicht abgebaut oder aus einem Material ausgewaschen.

Für eine antimikrobielle Verwendung kann Wolframblau allein oder in Kombination mit weiteren Wirkstoffen und/oder Hilfsstoffen eingesetzt werden. WO₃ ist vorzugsweise nicht vorhanden.

Weitere Vorteile ergeben sich, wenn Wolframblau in Kombination mit wenigsten einem Hydrophilierungs- oder Hygroskopierungsmittel verwendet wird. Besonders bevorzugte Hydrophilierungs- und Hygroskopierungsmittel werden nachstehend beschrieben.

Erfindungsgemäß kann Wolframblau in ein Material, welches mit antimikrobiellen Eigenschaften ausgestattet werden soll, eingebaut oder zumindest auf dessen Oberfläche abgelagert werden. Auf diese Weise resultiert ein antimikrobiell wirksamer Verbundwerkstoff.

Ein weiterer Gegenstand der Erfindung ist dementsprechend ein antimikrobiell wirksamer Verbundwerkstoff umfassend Wolframblau und wenigstens einem weiteren Werkstoff. Bevorzugt liegt die mittlere Korngröße von Wolframblau dabei wie oben angegeben zwischen 0,1 µm und 0,9 µm, weiter bevorzugt 0,2 bis 0,7 µm und insbesondere im Bereich von 0,25 µm bis 0,5 µm. Kleinere Partikel als 0,1 µm und insbesondere Nanopartikel sind erfindungsgemäß nicht vorgesehen. Der erfindungsgemäße Verbundwerkstoff ist vorzugsweise frei von sauerstoffgesättigtem WO₃ (Wolframgelb).

Unter einem Verbundwerkstoff wird im Sinne der vorliegenden Erfindung ein Werkstoff verstanden, der aus zwei oder mehreren miteinander verbundenen Materialien besteht, wobei zumindest eines der Materialien das vorstehend definierte Wolframblau ist. Der weitere Werkstoff kann grundsätzlich aus einem beliebigen Material ausgebildet sein und beispielsweise auch selbst einen Verbundwerkstoff darstellen.

Die Anwesenheit von Wolframblau verleiht einem erfindungsgemäßen Verbundwerkstoff eine antimikrobielle Wirkung. Die Haftfähigkeit pathogener Keime ist stark reduziert. Die Proliferation von Mikroorganismen und die Biofilmbildung werden gehemmt. Dies ist beispielsweise in Krankenhäusern, Pflegeheimen usw. von besonderer Bedeutung, da Mikroorganismen in Biofilmen durch Antibiotika, organische Biozide, Desinfektionsmittel und dergleichen nicht oder zumindest nicht dauerhaft entfernbar sind. Da eine Absenkung des pH-Werts lediglich im Bereich der Oberflächengrenzschicht des Verbundwerkstoffs, bzw. eines aus diesem gefertigten Bauteils oder Produkts benötigt wird, sind entsprechend geringe Mengen an Wolframblau im Bereich der Oberfläche ausreichend, um die gewünschte antimikrobielle Wirksamkeit zu erreichen.

Wolframblau ist im Wesentlichen nicht wasserlöslich, sodass es aus dem Verbundwerkstoff nicht ausgewaschen wird, sondern dort verbleibt und über die gesamte Lebensdauer des Verbundwerkstoffs seine antimikrobielle Wirksamkeit aufrechterhalten bleibt.

Der wenigstens eine weitere Werkstoff des Verbundwerkstoffs kann grundsätzlich aus beliebigen Werkstoffklassen ausgewählt sein. Beispielsweise kann es sich um einen anorganischen, metallischen, keramischen oder organischen Werkstoff oder beliebige Kombinationen davon handeln. Als weitere Werkstoffe kommen grundsätzlich beispielsweise Kunststoffe, Farben, Lacke, Silikone, Gummi, Kautschuk, Melamin, Acrylate, Methylacrylate, Wachse, Epoxydharze, Glas, Metall, Keramik und weitere in Frage. In einer bevorzugten Ausführungsform umfasst der erfindungsgemäße Verbundwerkstoff als weiteren Werkstoff zumindest ein organisches Polymer, bzw. ein Compound und/oder ein Silikon. Beispiele für organische Polymere sind Polyethylen (PE) und Polypropylen (PP).

Der Werkstoff, in oder auf welchen zum Zwecke der antimikrobiellen Ausstattung das Wolframblau eingebracht wird, kann eine feste und/oder flüssige Matrix bilden. Es kann vorgesehen sein, dass Wolframblau derart zugegeben wird, dass es zwischen 0,1 % und 10 % (Gewichts- oder Volumenprozente) des Gesamtgewichts bzw. Gesamtvolumens ausmacht. Bevorzugt ist ein Anteil von 1-3 Gew.-% Wolframblau.

Der Verbundwerkstoff kann grundsätzlich als Schichtverbund, Faserverbund, Teilchenverbund oder Durchdringungsverbund ausgebildet sein.

Im Prinzip kann der erfindungsgemäße Verbundwerkstoff bei Standardbedingungen fest oder flüssig vorliegen. Beispielsweise kann der Verbundwerkstoff in Form einer Lösung, Suspension und/oder Dispersion, beispielsweise als Lack bzw. flüssiges Beschichtungsmittel ausgebildet sein.

Wolframblau kann auf der Oberfläche des Verbundwerkstoffs angeordnet und/oder im Verbundwerkstoff verteilt sein. Bevorzugt ist gemäß der Erfindung eine Anordnung von Wolframblau zumindest im Bereich der Oberfläche des Verbundwerkstoffs, da hier eine antimikrobielle Wirkung gewünscht ist. Beispielsweise kann Wolframblau als Schicht oder Bestandteil einer Schicht auf ein Substrat bzw. Trägermaterial aufgebracht sein. Das Substrat bzw. Trägermaterial unterliegt hierbei nahezu keinen strukturellen oder materialtechnischen Einschränkungen. Grundsätzlich können dabei nur ein oder mehrere Bereiche der Oberfläche oder die gesamte Oberfläche des Verbundwerkstoffs durch Wolframblau antimikrobiell ausgestattet sein. Alternativ oder zusätzlich kann Wolframblau auch innerhalb des Verbundwerkstoffs angeordnet bzw. im Verbundwerkstoff verteilt vorliegen. Dadurch wird gewährleistet, dass die antimikrobielle Wirkung auch bei einer oberflächlichen Abnutzung des Verbundwerkstoffs dauerhaft erhalten bleibt.

In Abhängigkeit des Verwendungszwecks kann der Verbundwerkstoff im Rahmen der vorliegenden Erfindung grundsätzlich als Halbzeug, d.h. als halbfertiges Material vorliegen, das erst nach weiteren Verarbeitungsschritten seine endgültige Verwendungsform erreicht. Alternativ kann der Verbundwerkstoff bereits als fertiges Bauteil ausgebildet sein, welches ohne weitere Verarbeitungsschritte seinem gewünschten Verwendungszweck zugeführt werden kann.

In einem erfindungsgemäßen Verbundwerkstoff kann Wolframblau allein oder in Kombination mit weiteren Wirkstoffen und/oder Hilfsstoffen enthalten sein.

In einer bevorzugten Ausführungsform weist ein erfindungsgemäßer Verbundwerkstoff neben Wolframblau keine zusätzlichen antimikrobiell wirksamen Verbindungen, wie beispielsweise Silber oder Silberverbindungen, insbesondere Nanosilber oder lösliche Silberverbindungen wie Silbernitrat oder dergleichen auf. Kupfer, organische Biozide, Zeolithe und dergleichen sind vorzugsweise ebenfalls nicht in einem erfindungsgemäßen Verbundwerkstoff enthalten. Auf diese Weise werden eine bessere Umweltverträglichkeit und eine erhebliche Kostensenkung erreicht. Auch Wolframgelb ist vorzugsweise nicht vorhanden.

Der Massegehalt von Wolframblau bezogen auf die Gesamtmasse des Verbundwerkstoffs liegt vorteilhafterweise zwischen 0,1 und 80 Gew.-%, insbesondere zwischen 1,0 und 30 Gew.-% und vorzugsweise zwischen 1,5 und 5,0 Gew.-%. Bei diesem Massenverhältnis wird eine besonders hohe antimikrobielle Wirksamkeit bei möglichst geringem Materialeinsatz an Wolframblau sichergestellt.

Als Hilfsstoffe in einem erfindungsgemäßen Verbundwerkstoff kommen grundsätzlich beliebige, im Fachbereich übliche Additive in Betracht. Es versteht sich, dass mögliche Hilfsstoffe in Abhängigkeit von dem jeweiligen Material des Verbundwerkstoffs variieren können. Bevorzugt werden übliche Dispergiermittel, antistatische Mittel, Netzmittel, Emulgiermittel, etc. verwendet.

Die Verwendung von Partikeln mit den genannten mittleren Korngrößen bietet den besonderen Vorteil, dass einerseits eine besonders hohe antimikrobielle Wirksamkeit realisiert werden kann und der erfindungsgemäße Verbundwerkstoff andererseits frei von Nanopartikeln ist.

Weitere Vorteile ergeben sich, wenn Wolframblau in Kombination mit wenigsten einem Hydrophilierungs- oder Hygroskopierungsmittel verwendet wird, das zumindest im Bereich der Oberfläche des Verbundwerkstoffs angeordnet ist. Auf diese Weise wird die antimikrobielle Wirksamkeit in besonders trockenen Umgebungen, also beispielsweise bei sehr geringer Luftfeuchtigkeit und dementsprechend geringen verfügbaren Wassermengen, die für das Ausbilden einer sauren Oberflächengrenzschicht wichtig sind, wesentlich erhöht. Beispiele für geeignete Hydrophilierungs- und/oder Hygroskopierungsmittel sind insbesondere SiO₂, insbesondere in Form von Kieselgel oder als pyrogenes Siliziumdioxid. Diese bilden eine Art Feuchtigkeitspuffer und gewährleisten so eine Mindestfeuchte im Produkt. Außerdem wurde gefunden, dass die Assoziation von Wolframblau mit SiO₂ bewirkt, dass Wolframblau besonders gut in dem Verbundwerkstoff zurückgehalten wird und ein Auswaschen vollständig verhindert werden kann. SiO₂ wird vorzugsweise mit einer Partikelgrößenverteilung im Bereich zwischen 0,25 µm und 25 µm mittlerer Partikeldurchmesser verwendet.

Weitere Beispiele für weitere erfindungsgemäß verwendbare Hydrophilierungs- und/oder Hygroskopierungsmittel sind organische Säuren, wie etwa Abietinsäure, Arachidonsäure, Arachinsäure, Behensäure, Caprinsäure, Capronsäure, Cerotinsäure, Erucasäure, Fusarinsäure, Fumarsäure, Gallensäuren, Icosensäure, Isophthalsäure, Lactonsäure, Laurinsäure, Lignocerinsäure, Linolensäure, Lävopimarsäure, Linolsäure, Margarinsäure, Melissinsäure, Montansäure, Myristinsäure, Neoabietinsäure, Nervonsäure, Nonadecansäure, Ölsäure, Palmitinsäure, Palmitoleinsäure, Pelargonsäure (Nonansäure), Pimarsäure, Palustrinsäure, Palmitinsäure, Rizinolsäure, Stearinsäure, Sorbinsäure, Tanninsäure, Tridecansäure, Undecansäure und Vulpinsäure. Weiterhin haben sich Malonsäure, Maleinsäure und Maleinsäureanhydrid, Milchsäure, Essigsäure, Zitronensäure, Salicylsäure und Ascorbinsäure, sowie deren Salze als vorteilhaft erwiesen. Ebenfalls verwendet können Säureanhydride, ampholytische Substanzen, Puffersysteme, Polymersäuren, lonentauscherharze, sowie Säuresulfonate und Säurehalogenide.

Der Massengehalt an Hydrophilierungs und/oder Hygroskopierungsmittel bezogen auf das Gesamtgewicht des Verbundwerkstoffs liegt vorteilhafterweise im Bereich von 0,1 % und 15 %. Beispielsweise kann der Massengehalt 0,5 %, 1 %, 2 %, 3 %, 4 %, 5 %, 6 %, 7 %, 8 %, 9 %, 10 %, 11 %, 12 %, 13 % oder 14 % betragen. Besonders vorteilhaft ist ein Massengehalt im Bereich zwischen 1 und 5 %, bevorzugt im Bereich von 2-4 %. Weiterhin kann der Massengehalt bzw. das Massenverhältnis des Hydrophilierungs- und/oder Hygroskopierungsmittels derart eingestellt werden, dass er dem gewählten Massengehalt an Wolframblau entspricht.

In einer besonders bevorzugten Ausführungsform wird Wolframblau zumindest teilweise mit dem Hydrophilierungs- und/oder Hygroskopierungsmittel, insbesondere SiO₂ beschichtet und/oder agglomeriert. Dadurch wird auf einfache Weise eine räumliche Nähe der beiden Verbindungsklassen sichergestellt, sodass Wolframblau auch unter besonders trockenen Bedingungen unmittelbar mit der zur Senkung des pH-Werts erforderlichen Feuchtigkeit versorgt wird.

In einem weiteren Aspekt der vorliegenden Erfindung ist die Verwendung eines antimikrobiell wirksamen Verbundwerkstoffs wie oben definiert zur Herstellung eines antimikrobiell wirksamen Produkts vorgesehen.

Ein weiterer Aspekt der Erfindung betrifft ein Verfahren zur Herstellung eines antimikrobiell wirksamen Verbundwerkstoffs wie vorstehend definiert. Hierzu wird Wolframblau mit wenigstens einem weiteren Werkstoff verbunden.

Vorteilhafterweise wird bei der Herstellung eines Verbundwerkstoffs das Wolframblau mit wenigstens einem Hydrophilierungs- und/oder Hygroskopierungsmittel wie vorstehend definiert kombiniert, wobei das Hydrophilierungs- und/oder Hygroskopierungsmittel zumindest im Bereich der Oberfläche des Verbundwerkstoffs angeordnet wird. Als besonders vorteilhaft hat es sich erwiesen, Wolframblau zumindest teilweise mit dem Hydrophilierungs- und/oder Hygroskopierungsmittel, insbesondere SiO₂ zu beschichten und/oder zu agglomerieren.

Die vorliegende Erfindung soll durch die nachfolgenden Figuren und Beispiele weiter veranschaulicht werden.

### Figuren

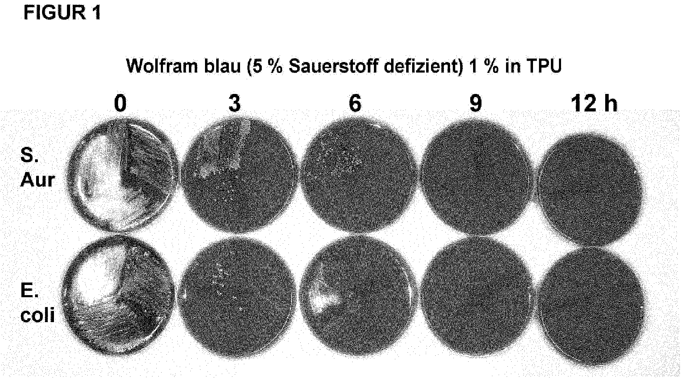

- **Fig. 1**: zeigt die antimikrobielle Wirksamkeit von Wolframblau (WO₃ 5% Sauerstoff defizient, 1% in TPU) gegenüber den Bakterien *S. aureus* und *E. coli.* Bereits nach 9 h sind die untersuchten Proben völlig keimfrei.

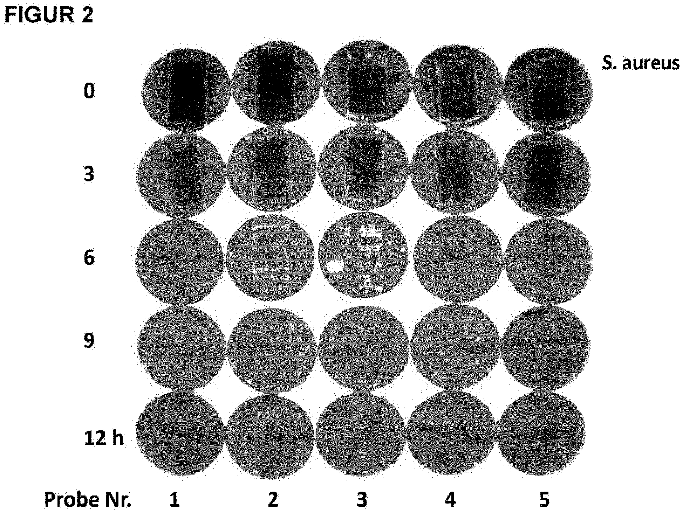

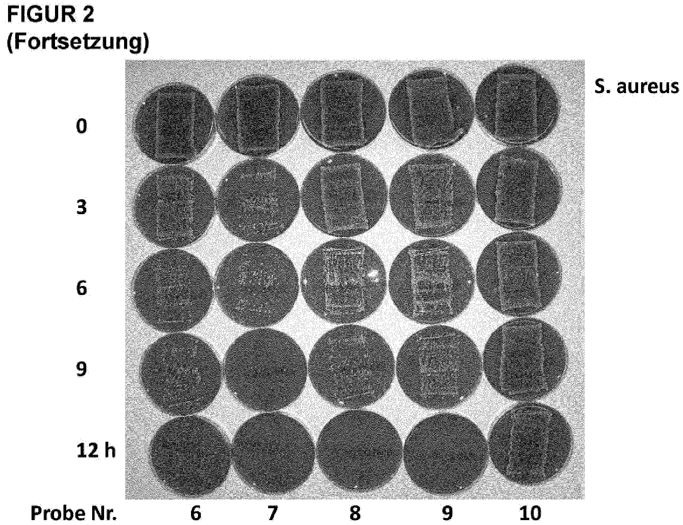

- **Fig. 2**: zeigt einen Vergleich der Wirksamkeit von Wolframblau mit Molybdän(VI)oxid, Wolfram(VI)oxid und verschiedenen Mischungen gegenüber *S. aureus.*
Probe Nr. 1: MoO₃,
Nr. 2, 3, 6: WO₃ (Wolframgelb),
Nr. 4, 7: Wolframblau (WO₃ 5% Sauerstoff defizient),
Nr. 5, 8, 9: Mischung WO₃(gelb)/Wolframblau,
Nr. 10: Kontrolle
Wolframblau ist im Vergleich zu WO₃ (gelb) klar überlegen und zeigt bereits nach 6 h eine nahezu vollständige Keimfreiheit der untersuchten Probe. Auch Mischungen von Wolframblau und Wolframgelb sind wesentlich weniger wirksam als reines Wolframblau.

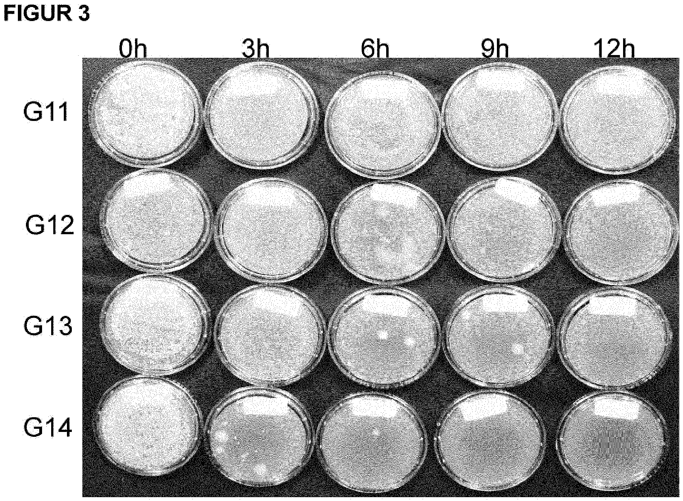

- **Fig. 3**: zeigt einen Vergleich der antimikrobiellen Wirksamkeit von Wolframgelb und Wolframblau in unterschiedlichen Konzentrationen.
G11: 1% WO₃ (gelb)
G12: 2% WO₃ (gelb)
G13: 1% Wolframblau
G14: 2% Wolframblau
Wolframblau ist bereits in geringerer Konzentration deutlich effektiver.

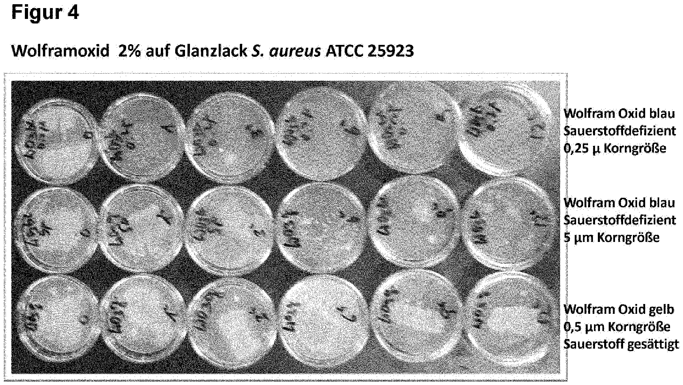

- **Fig. 4**: zeigt die Wirksamkeit von Wolframblau gegen *S*. *aureus* abhängig von der Korngröße und im Vergleich zu Wolframgelb. Die Wolframoxide werden jeweils in einer Konzentration von 2% eingesetzt. Für Wolframblau (5% sauerstoffdefizient) werden Korngrößen von 0,25 µm und 5 µm verglichen. Die Korngröße von Wolframgelb beträgt 0,5 µm.

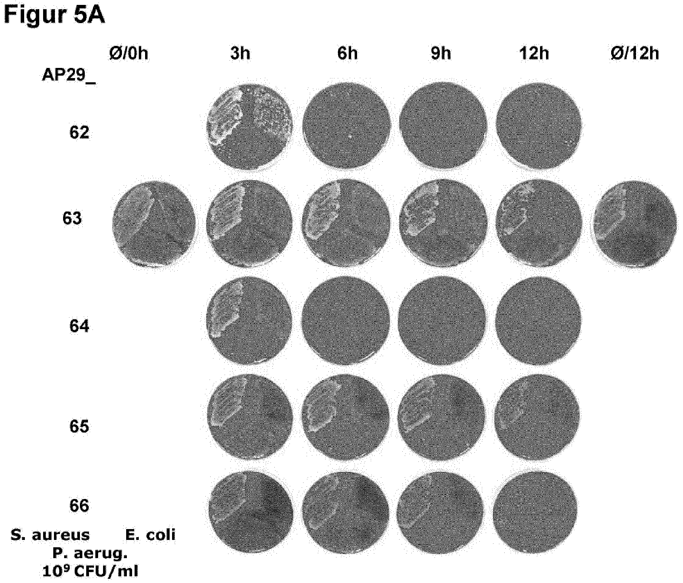

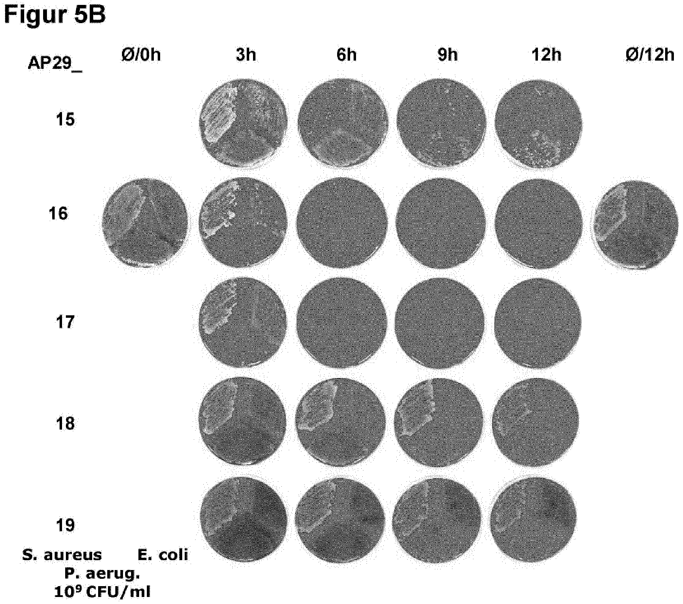

- **Fig. 5**: zeigt Untersuchungen zur Wirksamkeit von Wolframblau und Wolframgelb in Kombination mit verschiedenen Additiven. Die Keime waren jeweils *S.aureus* (links), *E.coli* (rechts) und *P.aerug.* (unten). Folgende Materialien wurden untersucht:
- **5A:**: 62: PE + 2% WO₃ (blau) + 1% Disperplast 1150
63: PE + 2% WO₃ (gelb) + 1% Disperplast 1018
64: PE + 2% WO₃ (blau) + 1% Atmer 129MB
65: PE + 2% MoO₃ + 1% Palsgaard DMG0093
66: PE + 1% Lubrophos LM-400E
- **5B:**: 15: PP + 2% WO₃ (gelb/blau) + 1% Crodafos MCA-SO
16: PP + 2% WO₃ (blau) + 1% Lubrophos LM-400E
17: PP + 2% WO₃ (blau) + 1 % Pluronic PE 8100
18: PP + 2% WO₃ (gelb) + 1 % Surfynol 440
19: PP + 2% WO₃ (gelb) + 1% Natriumdodecylsulfat
Außerdem sind jeweils durchschnittliche Keimbelastungen zu Beginn der Untersuchung (T=0 h) und nach 12 h gezeigt.
Gegenüber allen Keimen ist die Wirksamkeit von Wolframblau deutlich besser als die aller anderen untersuchten Wirkstoffe. Es zeigt sich auch, dass Mischungen von Wolframgelb und Wolframblau wesentlich schlechter wirksam sind als Wolframblau alleine.

## Patentansprüche

1. Verwendung von Wolframblau als antimikrobieller Wirkstoff, wobei Wolframblau sauerstoffdefizitäres WO₃ ist, insbesondere WO₃ - 1 bis 10 Mol-% Sauerstoff, bevorzugt WO₃ - etwa 5 Mol-% Sauerstoff, und wobei Wolframblau in Form von Partikeln mit einer mittleren Korngröße zwischen 0,1 µm und 0,9 µm vorliegt, vorzugsweise mit einer mittleren Korngröße im Bereich von 0,2 bis 0,7 µm, weiter bevorzugt im Bereich von 0,25 bis 0,5 µm und keine Partikel mit einer Korngröße von weniger als 0, 1 µm vorhanden sind.

2. Antimikrobiell wirksamer Verbundwerkstoff, umfassend Wolframblau wie in Anspruch 1 definiert und wenigstens einen weiteren Werkstoff.

3. Antimikrobiell wirksamer Verbundwerkstoff nach Anspruch 2, weiterhin umfassend wenigstens ein Hydrophilierungs- und/oder Hygroskopierungsmittel das zumindest im Bereich der Oberfläche des Verbundwerkstoffs angeordnet ist.

4. Verbundwerkstoff nach Anspruch 3,
worin das Wolframblau zumindest teilweise mit dem Hydrophilierungs- und/oder Hygroskopierungsmittel beschichtet und/oder agglomeriert ist.

5. Verbundwerkstoff nach Anspruch 3 oder 4, worin das Hydrophilierungs- und/oder Hygroskopierungsmittel SiO₂, insbesondere Kieselgel oder pyrogenes Siliciumdioxid, umfasst.

6. Verbundwerkstoff nach einem der Ansprüche 2-5,
worin der Massegehalt von Wolframblau bezogen auf die Gesamtmasse des Verbundwerkstoffs 0,1 % bis 80 %, insbesondere 1,0 % bis 30 % und vorzugsweise 1,5 % bis 5,0 % beträgt.

7. Verbundwerkstoff nach einem der Ansprüche 2-6,
worin der weitere Werkstoff zumindest ein organisches Polymer und/oder Silikon umfasst.

8. Verbundwerkstoff nach einem der Ansprüche 2-7,
welcher als Schicht-Verbund, Faser-Verbund- Teilchen-Verbund oder Durchdringungsverbund ausgebildet ist.

9. Verwendung eines antimikrobiell wirksamen Verbundwerkstoffs nach einem der Ansprüche 2-8 zur Herstellung eines antimikrobiell wirksamen Produkts.

10. Verfahren zur Herstellung eines antimikrobiell wirksamen Verbundwerkstoffs nach einem der Ansprüche 2-8,
worin Wolframblau mit wenigstens einem weiteren Werkstoff verbunden wird.

11. Verfahren nach Anspruch 10,
worin wenigstens ein Hydrophilierungs- und/oder Hygroskopierungsmittel zumindest im Bereich der Oberfläche des Verbundwerkstoffs angeordnet wird.

12. Verfahren nach Anspruch 11,
worin Wolframblau zumindest teilweise mit dem Hydrophilierungs- und/oder Hygroskopierungsmittel beschichtet und/oder agglomeriert wird.
